Europäisches Patentamt

European Patent Office

Office européen des brevets

(11) Publication number: 0 112 136
A2

(12) **EUROPEAN PATENT APPLICATION**

(21) Application number: 83307506.2

(22) Date of filing: 09.12.83

(51) Int. Cl.³: B 23 B 27/14
B 23 B 51/04

(30) Priority: 13.12.82 GB 8235513

(43) Date of publication of application:
27.06.84 Bulletin 84/26

(84) Designated Contracting States:
AT BE CH DE FR GB IT LI-NL SE

(71) Applicant: GENERAL ELECTRIC COMPANY
1 River Road
Schenectady New York 12305(US)

(72) Inventor: Hale, Alan Arthur
Byways Shooters Way Lane
Berkhamsted Hertfordshire HP4 3NW(GB)

(74) Representative: Turner, Paul Malcolm
PAUL M. TURNER AND COMPANY European Patent
Attorneys 47 Marylebone Lane
London W1M 6DL(GB)

(54) Inserts for cutting tools.

(57) Inserts (210) which are asymmetrical in shape, for cutting tools and having improved strength at a corner of the insert, are described. The insert (210) has two parallel asymmetrical side faces (220) and contiguous edge faces wherein cutting edges (212-218) are formed at the junction of at least one of the side faces (220) and each of the contiguous edge faces. The asymmetry of the insert is such that when in use in a drill, the inserts cannot be incorrectly indexed in the drill. At least one of the asymmetrical side faces (220) of the insert for cutting tools has an asymmetrical chip breaker (232) therein capable of providing strength at the corner (222,226) of the insert, especially at the corner of the insert which forms a center line of the drill when in use. In preferred embodiments, the indexable inserts (220) are rhombic or octagonal in shape.

FIG.2

EP 0 112 136 A2

-1-

## INSERTS FOR CUTTING TOOLS

The present invention relates to disposable inserts which can be used for turning, boring and milling. More particularly, the invention relates to indexable inserts which are asymmetrical in shape. The insert may have various different chip breaker forms.

Disposable indexable inserts are used in many machine tools. They are generally detachably secured to a holder to be used for cutting and the like. When the cutting edge is worn during operation, the insert can be removed from the holder, turned such that a new cutting edge is presented to the workpiece and once again secured to the holder ready for further use. When all the cutting edges have been used in this manner, the insert is replaced.

Asymmetrical-shaped inserts are used in various machine tools, such as, turning tools, drilling and grooving tools. A known type of asymmetrical insert is rhombic in shape, that is, roughly diamond-shaped. A rhombic insert is also commonly used on drills. Triangular inserts are described in GB2116082.

Other asymmetrical-shaped inserts are described in GB2116081 and EP88505. As described in those applications, the inserts are octagonal in shape. The insert is indexable and has eight contiguous edge faces of equal length with two octagonal side faces having alternate corners with equal obtuse angles. Cutting edges of these inserts are formed at the junction of at least one of the octagonal side faces and each of the eight contiguous edge faces.

One of the problems which arises with inserts used in a drill, is that there are surface speed differences over the cutting edges of the drill. The cutting edges on the insert or inserts have a high cutting speed towards the outer circumference of the drill when viewed axially, whereas the cutting edges at the center of the drill, particularly along the center line, do not have any cutting speed. There is merely axial pressure applied to the insert at this point. Accordingly, the insert moves forward as the hole is bored but does not have any cutting speed.

The present invention attempts to overcome the foregoing disadvantages of the prior art inserts.

The present invention also attempts to provide indexable inserts for cutting tools having improved strength at the corner of the insert which forms from a center line of the drill when the insert is used in a drill.

The present invention in addition attempts to provide an indexable insert which is capable of sustaining axial pressure on the center point of a drill on which the insert is secured.

The indexable insert is capable of sustaining axial pressure on the centere point of a drill.

In accordance with the present invention, there is provided an insert for cutting tools comprising an insert body having two parallel asymmetrical side faces and contiguous edge faces wherein at least one cutting edge is formed at the junction of at least one side face and at least one contiguous edge face, and wherein a corner is formed at adjacent contiguous edge faces, at least one of the asymmetrical side faces having asymmetrical chip breakers therein capable of providing strength at a corner of the insert.

The present invention also provides an indexable insert having two parallel asymmetrical side faces and contiguous edge faces, cutting edges being formed at the junction of at least one of the side faces and each of the contiguous edge faces, the asymmetry being such that when in use in a drill the inserts cannot be incorrectly indexed in the drill, at least one of the asymmetrical side faces having asymmetrical chip breakers therein

-4-.

capable of providing strength at the corner of the insert which forms from a center line of the drill when in use.

A particular example of the present invention is an insert which is rhombic in shape and having four sides with the opposite pairs of each side being parallel but such that the rhombus is not a square. In such an insert, it is normal to provide a chip breaker extending around the sides of the side faces immediately behind the cutting edges of the insert. The present invention provides that the portion of the insert which would be on the center line of a drill when the drill is in use, be strengthened. The corresponding point on the insert when the insert is rotated through 180° would also be strengthened. A drill using such an insert typically has two pockets to receive the inserts. In this embodiment, identical asymmetrical inserts are used in pairs such that a first cutting edge of each insert is capable of being presented to the workpiece. After use, the insert is rotated through 180° and is reused from the same pocket with a second cutting edge being presented to the workpiece. In this manner, the insert would first be used in the outer pocket using two of the cutting edges and then be moved to the inner pocket using the remaining two cutting edges in turn until all the cutting edges are used. Due to the asymmetrical nature of the insert, the cutting edges presented to the workpiece from the outer pocket cannot be presented to the workpiece from the inner pocket and vice versa.

Another example of the insert which can be used in the present invention, is the type of indexable insert which has two octagonal side faces and eight contiguous

edge faces separating the side faces. Once again, the inserts may be used in a drill in identical pairs. When -positioned in the pockets of the drill, it is only possible to use the insert such that the two opposing pairs of cutting edges in any one insert are presented to the workface from one pocket. The remaining two opposing cutting edges are presented to the workpiece from the insert positioned in the other pocket. The insert is strengthened on the part of the cutting edge which is presented to the workpiece and falls along the center line of the drill.

Although single pairs of inserts are described for use in drills, it should be understood that the present invention also applies to drills in which two or more pairs of inserts may be used.

The insert of the present invention may have conventional chip breakers, for example, in the form of grooves, dimples, recesses and the like in or on the surface of the side face of the insert, which are generally moulded therein. The chip breakers are asymmetrical and are usually positioned behind, but spaced from, the cutting edges of the insert in order that the strength of the cutting edges may not be diminished. The chip breakers of the present invention form an asymmetrical pattern on the surface of the side face and do not extend into at least one corner on at least one side face of insert body.

The asymmetrical-shaped inserts described above can be used indexably such that the correct cutting edges are presented to the workpiece in a drill at the correct points.

The present invention will be further described by way of example only, with reference to the accompanying drawings, in which:-

FIGURE 1 is a perspective view of a rhombic insert of the present invention;

FIGURE 2 is a perspective view of an asymmetrical octagonal insert of the present invention;

FIGURES 3A, 3B and 3C are plan views of rhombic inserts of the present invention in use in a drill showing a chip breaker arrangement; and

FIGURES 4A and 4B are plan views of octagonal inserts in use in a drill.

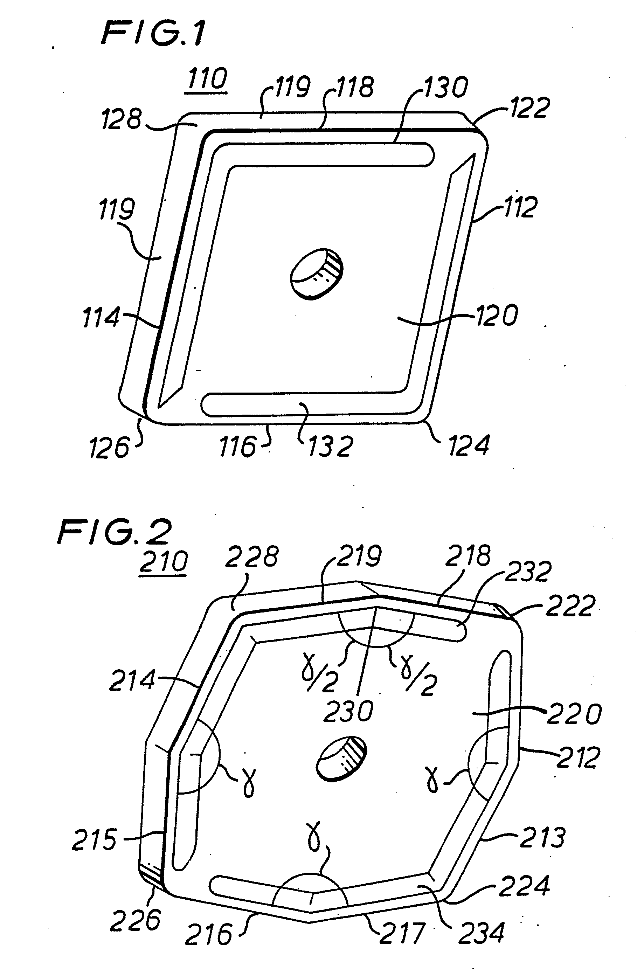

Referring to Figure 1, the general arrangement of the insert 110 is shown. In plan view, it is a rhombically-shaped insert in the form of a parallelogram. The lengths of each side are the same, although this is not an essential feature. The insert in a positive rake form has four cutting edges 112, 114, 116 and 118 arranged at the junction between rhombic side face 120 and contiguous edge faces 119. In a positive-raked insert, the edge faces are raked $\delta$ degrees from the perpendicular to the side face 120 to provide clearance during drilling. The value of $\delta$ may vary, but it is preferably about 7°. The four edge faces join end-to-end to form the four contiguous edge faces of insert 110.

Although it is not critical, each of the corners 122, 124, 126 and 128 are rounded to facilitate moulding of the insert and provide a stronger corner. The angle forming the pair of corners 124 and 128 is equal as is the angle forming the corners 122 and 126. The basic shape of this insert is well known and may form, for example, an 80° diamond insert such that the acute angles are 80°, and the obtuse angles are 100°. Other diamond inserts which may be used, are known, for example, those having acute angles of 55°.

Chip breakers are provided behind the cutting edges of the inserts, although these are not continuous around the whole periphery. The chip breakers are asymmetrically arranged or patterned on or in the surface of the side faces in order to impart improved strength to the insert. In preferred embodiments, one end of a chip breaker terminates at a point sufficienty distal the corner of the insert to provide strength at the corner of the insert. The insert is not grooved, dimpled, or recessed, that is, the integrity of the body of the insert, otherwise referred to herein as the central land of the insert, is not interrupted, intercepted or otherwise compromised at the corner by the chip breaker, thereby providing a strengthened portion of the insert at the corner thereof. Although it is not critical, in certain preferred embodiments of the present invention, the chip breakers terminate at least about 1 mm from the corner of the insert. Thus, strength at the corner of the insert is provided by the central land or body of the insert. In these embodiments the chip breaker does not extend to at least one corner on at least one of the side faces. In one embodiment, the chip breaker does not extend to the corner at oppositely disposed corners of the insert body.

For use in a drill, the acute angle of the insert will be positioned at the center line of the drill. At this point the chip breakers do not exist. Thus, chip breaker 130 in Figure 1 extends behind cutting edge 118 through obtuse angled corner 128 and behind cutting edge 114 to end in acute angled corner 126. Chip breaker 130 does not extend into corner 122, that is, it is distal the corner, and only partially extends behind cutting edge 118 leaving a land which strengthens corner 122. This is an asymmetrical chip breaker configuration wherein the chip breaker does not extend into corner 122 but extends into corner 128 and corner 126. Thus, in accordance with the present invention, the chip breakers, for example, chip breaker grooves, terminate at a point sufficiently distal the corner of the insert leaving a land or body of the insert which strengthens the corner. In Figure 1, it can be seen that chip breaker 130 does not extend into corner 122, and chip breaker 132 does not extend into corner 126. In this embodiment, chip breakers do not extend into oppositely disposed corners of the insert. Behind cutting edge 114, the chip breaker extends into corner 126 to provide a complete chip breaker for cutting edge 114. A similar arrangement is provided behind the cutting edge 116 and 112. Chip breaker 130 may have a parallel configuration or may taper such that the width of the chip breaker increases as it extends from corner 122 towards corner 128. Similarly, chip breaker groove 132 may have a parallel configuration behind cutting edge 116. Alternatively, the groove may widen as it reaches corner -124 extending away from corner 126. Similar chip breaking grooves can be positioned behind cutting edge 112 and 114, the grooves widening as they extend from obtuse angled corners 124 and 128, respectively.

Referring to Figure 2, there is described an octagonal insert of the type claimed in my copending United States patent application numbers 423,500 filed September 27, 1982 and 449,066 filed December 13, 1982. This is an insert 210 having eight contiguous cutting edges arranged in four pairs, namely, 212, 213; 214, 215; 216, 217; and 218, 219. Each of these pairs of cutting edges has been divided by an equal obtuse angle $S$ on the side face 220. Between the pairs of cutting edges are corners 222, 224, 226 and 228, opposing corners 222 and 226 having the same angle and opposing corners 224 and 228 having the same angles.

In a positive rake insert side face 220 is raked $\gamma$ degrees from the perpendicular to the edge faces, the junction of which forms the cutting edges already described, by an angle of $\gamma$ degress which is preferably about 7°.

Each of the corners of the insert 222, 224, 226 and 228 may be rounded to facilitate moulding of the insert and to provide a stronger corner.

The geometry of insert 210 may vary to provide four pairs of cutting edges. In the example shown in the drawings, the geometry is asymmetrical when it is considered along the line of symmetry of the cutting edges, that is, a notional line 230 dividing angle $\gamma$ into two angles $\gamma 2$. In use, such an insert 210 may be reversible if it is a negative rake insert, or it can be used in conjunction with the second insert if it is a -positive rake insert. As an example, the insert may have the following angles. The corners 222 and 226 may be 95°; the corners 224 and 228 may be 125°; and the angle $\delta$ may be 160°. As in the rhombic shape shown in Figure 1, chip breakers are provided behind the cutting edges. A chip breaking groove, for example, numeral 232, may extend behind cutting edge 218, 219, 214 and 215. However, chip breaking groove 232 will not extend into corner 222 leaving a land which strengthens the corner 222. A similar chip breaker 234 may extend behind the cutting edges 216, 217, 213 and 212. Chip breaker 234 does not extend into corner 226 in order to provide strength for that corner.

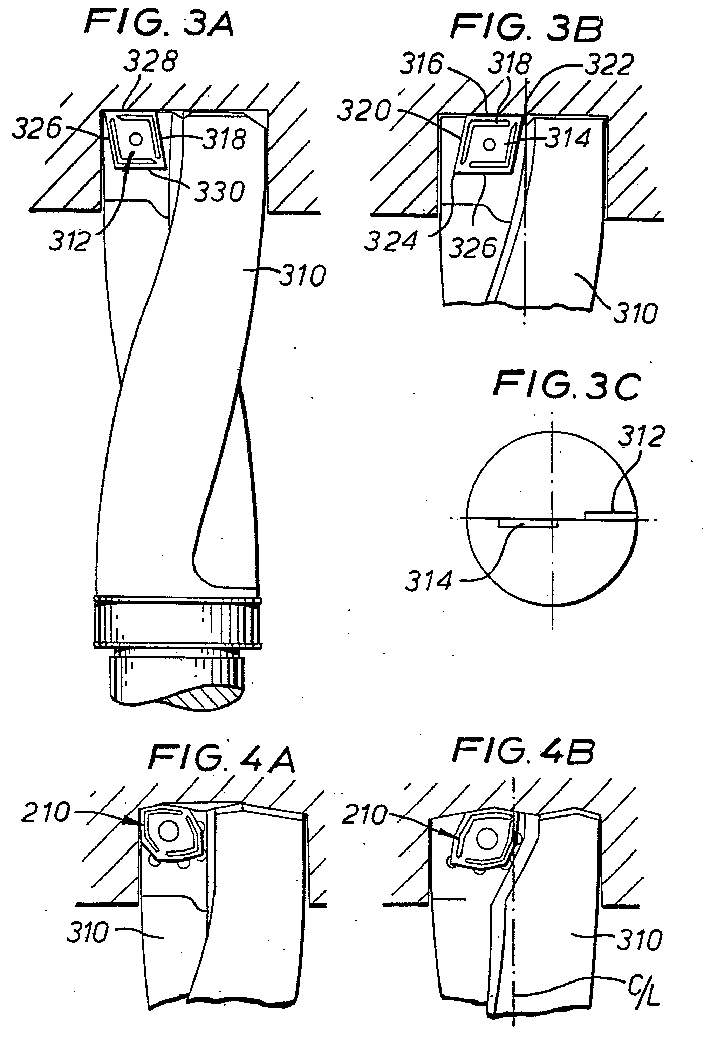

Referring to Figures 3A and 3B, there is shown in use in a drill, the rhombic insert described in Figure 1. Figures 3A and 3B show a drill shank 310, drill shank 310 having been turned 180° from the position shown in Figure 3A to the position shown in Figure 3B. A pair of inserts 312, 314 are used in the drill, the insert 312 being positioned on the outer periphery of the drill whereas the cutting edge of insert 314 sweeps an inner circle (see the axial view shown in Figure 3C). In use, insert 314, as shown in Figure 3B, has a portion of the cutting edge 316 which crosses the center line of the drill. Behind cutting edge 316 is chip breaker 318 which also extends behind cutting edge 320. Cutting edge 316, however, does not extend into corner 322 of the insert 314. It terminates at a point at a sufficient distance from corner 322 leaving a strengthened portion at the end of the cutting edge approximately along the center line of the drill. -Corner 324 has a similar arrangement such that a strengthened portion is provided in corner 324 behind cutting edge 326. The insert shown in Figure 3B is in the inner pocket of the drill shank such that on rotation the strengthened portion of corner 322 behind cutting edge 318 rotates approximately on the center line of the drill. At this point there is very little radial cutting action.

In Figure 3A, insert 312 is the same as insert 314 except that its orientation is 90° to the position of the insert in Figure 3B. In the drill pocket shown in Figure 3B, the only two cutting edges of insert 314 which can be used, are 318 and 326. Similarly, in Figure 3A, the only two cutting edges which can be used for drilling purposes, are 328 and 330. Behind cutting edges 328 and 330 is a chip breaking groove which extends the full length of the cutting edge. In use, because insert 312 is in the outer pocket of the drill and is subjected to high radial speeds, large amounts of metal are cut and need to be removed via the chip breakers. The asymmetry of the inserts allows it to be correctly indexed such that the cutting edge with the strengthened portions can only be used toward the center of the drill, whereas the cutting edge with the non-strengthened portion can only be used in the outer pocket of the drill. This allows the cutting edge to have a chip breaker behind its full length.

Referring now to Figures 4A and 4B, there is shown an octagonal insert of the quadgon type. Figure 4A shows insert 400 from the outer pocket whereas Figure 4B

shows insert 210 in the inner pocket after drill 310 has been rotated 180° from the position shown in Figure 4A. Inserts 210 used in Figures 4A and 4B are of the type shown in greater detail in Figure 2. The arrangement shown in Figure 2 shows the insert as it would be positioned in the inner pocket shown in Figure 4B, whereas the position for the outer pocket as shown in Figure 4A requires the insert of Figure 2 to be rotated through 90°. Corner 222 of Figure 2 is positioned such that the strengthened portion behind cutting edge 218 is approximately along the center line of the drill. Chip breaking groove 232 does not extend into corner 222 leaving a land at the center point. This strengthens the insert at the point which has no radial speed, but only axial speed, when positioned in the drill. When the insert is positioned in the outer pocket, the pair of cutting edges 212 nd 213 are presented to the drill. On indexing, after these cutting edges are used, cutting edges 214 and 215 are presented in the drill. However, it is not possible, due to the asymmetry of the inserts, to present the pair of cutting edges 216 and 217 or the pair of cutting edges 218 and 219 in this position on the drill. Assuming that cutting edges 212 and 213 are presented to the workpiece, a chip breaker groove 234 is provided behind these cutting edges. Chip breaking groove 234 extends behind the whole length of the cutting edges 213, 212 into corners 222 and 224 but does not extend into corner 226. Thus, there is a chip breaking groove only partially behind cutting edge 216. Because of the foregoing, there is an asymmetry·in the chip breaking groove. As already indicated, because of the higher radial speeds, the area _behind cutting edges 212 and 213 does not need to be strengthened, but this is required to provide sufficient chip breaking capabilities to remove the large amounts of metal during rotation of the drill.

As shown in Figure 2, the chip breakers behind the cutting edges 213 and 214 and the partial chip breakers behind cutting edges 216 and 218 may taper such that the width of the groove becomes narrower as it extends away from the angle $\delta$ formed between the pairs of cutting edges of the quadgon type octagonal insert.

Although cutting grooves are shown in the drawings other types and patterns of chip breakers may be used including dimples, raised portions and the like. In addition, the shape of the grooves, as shown in cross-section, may vary as is conventionally known in the art.

While other modifications of the invention and variations thereof which may be employed within the scope of the invention, have not been described, the invention is intended to include such modifications as may be embraced within the following claims.

## CLAIMS

1.    An indexable insert comprising two parallel asymmetrical side faces and contiguous edge faces on a central land having cutting edges formed at the junction of at least one of the side faces and each of the contiguous edge faces, the asymmetry being such that when in use in a drill the inserts cannot be incorrectly indexed in the drill, characterised in that at least one of the asymmetrical side faces having asymmetrical chip breakers theein capable of providing strength at the corner of the insert which forms a center line of the drill when in use.

2.    An insert for cutting tools comprising an insert body having two parallel asymmetrical side faces and contiguous edge faces on a central land wherein at least one cutting edge is formed at the junction of at least one side face and at least one contiguous edge face, and wherein a corner is formed at adjacent contiguous edge faces, characterised in that at least one of the asymmetrical side faces having asymmetrical chip breakers therein capable of providing strength at a corner of the insert.

3.    The insert as claimed in claim 1 or claim 2 characterised in that the strength at the corner of the insert is provided by the central land of the insert.

4.    The insert as claimed in any one of the preceding claims characterised in that the chip breaker does not extend to at least one corner on at least one of the side faces, thereby providing a strengthened portion of the insert.

5.    The insert as claimed in any one of claims 1 to 3 characterised in that the chip breaker does not extend to the corner at oppositely disposed corners of the insert body.

6.    The insert as claimed in any one of the preceding claims characterised in that the two asymmetrical side faces are rhombic in shape.

7.    The insert as claimed in any one of claims 1 to 4 characterised in that the two asymmetrical side faces are octagonal in shape.

8.    The insert as claimed in any one of the preceding claims characterised in that the strengthened portion of the insert is formed by the central land of the insert extending to the cutting edge at the corner of the insert which forms the center line of the drill when in use.

9.    The insert as claimed in any one of the preceding claims characterised in that the chip breakers are grooves, dimples or recesses in or on the surface of the side face of the insert, the chip breakers being positioned behind and spaced from the cutting edges.

10.    The insert as claimed in any one of the preceding claims characterised in that alternate chip breakers are tapered grooves.

11.    The insert as claimed in claim 10 characterised in that the tapered grooves extend to the strengthened position at the corner of the insert.

12.    The insert as claimed in any one of the preceding claims characterised in that the chip breaker terminates at a point sufficiently distal the corner to provide strength at the corner of the insert.

13.    The insert as claimed in claim 12 characterised in that the groove terminates at least 1 mm from the corner of the insert.

**FIG.1**

**FIG.2**

## FIG. 3A

328
326
318
330
312
310

## FIG. 3B

316   318   322
320
314
324   326
310

## FIG. 3C

312
314

## FIG. 4A

210
310

## FIG. 4B

210
310
C/L